# FASCICULE DE BREVET EUROPEEN

(11) **EP 2 318 564 B1**
(45) Date de publication et mention de la délivrance du brevet: **02.01.2013**
(21) Numéro de dépôt: 09806413.2
(22) Date de dépôt: 05.08.2009
(51) Int. Cl.: C23C 18/16, C23C 18/20, B29C 59/10, B29C 59/12, B29C 59/16

(54) **PROCÉDÉ DE TRAITEMENT OPTOPHYSIQUE DE SURFACE DE SUBSTRATS POLYMÈRES ET DISPOSITIF POUR LA MISE EN OEUVRE DU PROCÉDÉ**
VERFAHREN ZUR OPTOPHYSIKALISCHEN OBERFLÄCHENBEHANDLUNG VON POLYMERSUBSTRATEN UND VORRICHTUNG ZUR ANWENDUNG DIESES VERFAHRENS
PROCESS FOR THE OPTOPHYSICAL SURFACE TREATMENT OF POLYMER SUBSTRATES AND DEVICE FOR IMPLEMENTING THE PROCESS

(30) Priorité: 12.08.2008 FR 0855532
(43) Date de publication de la demande: 11.05.2011
(73) Titulaire: Jet Metal Technologies, 69450 Saint Cyr au Mont d'Or (FR)
(72) Inventeur: STREMSDOERFER, Samuel, F-69330 Chaponost (FR); STREMSDOERFER, Guy, F-69450 Saint Cyr au Mont d'Or (FR); MEAS, Yunny, Pedro Escobedo 76703 (MX); MAGALON, Lorena, Pedro Escobedo 76703 (MX)
(74) Mandataire: Cabinet Plasseraud
(86) Numéro de dépôt international: PCT/EP2009/060164
(87) Numéro de publication internationale: WO 2010/018115

(56) Documents cités:
- EP-B- 1 141 443
- WO-A1-2008/040700
- JP-A- 2 030 686
- US-A1- 2002 035 784
- ZHENG ET AL: "Surface Modification of Ultrahigh-Molecular-Weight Polyethylene Fibers" JOURNAL OF POLYMER SCIENCE PART B: POLYMER PHYSICS, vol. 42, 2004, pages 463-472, XP002519449
- NAVINSÊK B ET AL: "PVD COATINGS AS AN ENVIRONMENTAL CLEAN ALTERNATIVE TO ELECTROPLATING AND ELECTROLESS PROCESSES", SURFACE AND COATINGS TECHNOLOGY, ELSEVIER, AMSTERDAM, NL, vol. 116-119, 1 September 1999 (1999-09-01), pages 476-487, XP002465272, ISSN: 0257-8972, DOI: 10.1016/S0257-8972(99)00145-0

## Description

### DOMAINE TECHNIQUE

Le domaine technique de l'invention est celui du traitement de surface de substrats polymère ou copolymère, par exemple des ABS (Acrylonitrile-Butadiène-Styrène), notamment en vue de leur revêtement par des films métalliques.

La présente invention concerne aussi des procédés non électrolytiques de métallisation de substrats pour la décoration, par exemple la finition chrome de pièces automobiles et pour l'aéronautique. La présente invention vise également la métallisation non électrolytique de substrats pour l'électronique, notamment la réalisation de pistes conductrices.

### ART ANTERIEUR-PROBLEME TECHNIQUE

Dans le domaine de la métallisation non électrolytique des substrats polymère, tels les ABS, un traitement préalable de la surface du substrat est obligatoire de façon à favoriser l'adhésion du film métallique.

Le traitement préalable le plus répandu est un traitement chimique d'oxydation de la surface par attaque sulfochromique, notamment décrit dans US-B-3769061, GB-A-1240294 et GB-A-1291351. Ce traitement, très corrosif, permet l'obtention d'une surface microporeuse/nanoporeuse propre à favoriser l'ancrage mécanique du film métallique.

Le mélange sulfochromique est un mélange d'acide sulfurique et de chromate de potassium ou de sodium H₂SO₄/(K₂,Na₂)Cr₂O₇. Ce mélange est très toxique et dangereux pour l'environnement : les sels de chrome VI qu'il contient sont déclarés comme cancérogènes catégories 1 et 2 pour l'homme par l'Union Européenne. Outre les problèmes de toxicité des composés utilisés, le traitement de la surface par attaque sulfochromique ne donne pas de résultats d'adhérence satisfaisants lorsque l'on réalise la métallisation non électrolytique au moyen des procédés de la société Jet Métal Technologies, notamment décrits dans FR-A-2 763 962 et la demande de brevet français déposée sous le numéro 06 10287. En effet, l'oxydation étant très profonde et le film métallique étant très mince, les pores créés par l'oxydation induisent un phénomène de délamination du film métallique au cours du temps.

D'autres oxydations chimiques sont utilisées, de façon moins courante. Il peut s'agir de l'utilisation d'autres oxydants forts comme le permanganate de potassium. Ce dernier est inflammable, nocif pour l'homme et toxique pour les organismes aquatiques.

Il peut aussi s'agir d'un traitement préalable d'oxydation à l'ozone, en chauffant, notamment décrit dans JP-A-1092377. Dans ce traitement, l'oxydation est accélérée par irradiation aux ultra-violets (UV). L'ozone est un gaz inflammable qui se décompose spontanément en dioxygène. Il est aussi toxique par inhalation et corrosif.

WO2008040700 décrit un procédé de métallisation d'un substrat polymère comprenant un traitement UV/oxydation/ozonisation/Corona suivi d'une étape de dépôt physique en phase vapeur.

Pour remédier aux problèmes liés à l'utilisation de produits chimiques d'oxydation, qui sont dangereux et polluants, des solutions de traitement préalable mécanique ou physique ont été envisagées.

On connaît ainsi notamment un traitement mécanique préalable d'abrasion par sablage qui présente, entre autres, l'inconvénient de réaliser une abrasion trop grossière. En conséquence, pour un même rendu de brillance, le dépôt métallique à réaliser doit être d'une épaisseur beaucoup plus importante. Les coûts de métallisation sont, de ce fait, considérablement augmentés.

On connait également un traitement physique préalable par plasma sous pression réduite, en chauffant et sous atmosphère contrôlée. Un autre traitement physique préalable de la surface connu est le traitement par flammage.

Ces deux types de traitement physique préalable sont peu satisfaisants en termes de qualité d'adhésion du film.

### OBJECTIFS

Il serait donc souhaitable de disposer d'un procédé de traitement de surface qui permette de conférer au substrat polymère des propriétés physiques spécifiques, notamment de nanoporosité de surface, par exemple en vue de sa métallisation non électrolytique, et qui se substituerait totalement au traitement de surface par attaque sulfochromique.

Il serait également souhaitable de disposer d'un procédé de métallisation de la surface d'un substrat polymère par voie non électrolytique qui satisfasse à au moins l'un des objectifs suivants :
- le procédé devrait favoriser l'adhésion du film métallique à la surface du substrat polymère,
- le procédé devrait permettre la réalisation d'un dépôt métallique le plus mince possible, ayant notamment des propriétés optiques, par exemple de réflectivité et des propriétés de conductivité,
- le procédé devrait être « propre », c'est-à-dire que, pour rendre la surface du polymère nanoporeuse avant métallisation, le procédé ne devrait pas utiliser de solutions toxiques, polluantes et nocives comme les oxydants forts tels les sulfochromiques ou le permanganate de potassium,
- le procédé devrait permettre le recyclage des effluents issus du procédé,
- le procédé devrait être mis en oeuvre à l'aide d'une installation compacte s'intégrant dans des lignes de production couramment utilisées, par exemple de longueur de cabine allant de 1 m à 5 m, et permettre le traitement des substrats sur des lignes automatisées.

Un autre objectif de l'invention est de fournir un dispositif pour la mise en oeuvre de la totalité d'un tel procédé de traitement et de métallisation en ligne de substrats.

### BREVE DESCRIPTION DE L'INVENTION

Or, après de longues recherches la demanderesse a découvert qu'un traitement mixte UV/Corona de la surface du substrat (de préférence polymère) à métalliser, se substitue parfaitement au traitement existant par attaque sulfochromique et peut permettre en outre d'augmenter l'adhésion du film métallique sur le substrat (de préférence polymère) et l'aspect décoratif.

C'est pourquoi la présente invention a pour objet un procédé de traitement de surface d'un substrat caractérisé en ce qu'il comprend un traitement mixte UV/Corona de la surface du substrat (de préférence polymère).

Au sens de l'invention, le terme «*polymère*» désigne aussi bien les homopolymères que les copolymères comme par exemple l'Acrylonitrile-Butadiène-Styrène (ABS).

Par « *traitement mixte UV*/*Corona* », on entend par exemple que le substrat est soumis une ou plusieurs fois à une décharge électrique de traitement Corona et une ou plusieurs fois à une exposition UV de traitement UV. Ces traitements UV et Corona sont simultanés ou non, et peuvent être réalisés dans n'importe quel ordre.

Le terme « *traitement corona* » signifie par exemple que le substrat à métalliser est soumis à des décharges électriques par exemple de puissance de 1 à 100 kilowatts (kW) avec un matériel prévu à cet effet comportant une ou plusieurs, préférentiellement 2 ou 3 têtes de décharge (ou sonde). Dans la présente invention, le terme « *traitement Corona* » doit être compris dans son sens le plus large, il englobe notamment le traitement par plasma atmosphérique ("*air plasma*"), le plasma de flamme ("*flame plasma*"), et le plasma chimique.

Au sens de la présente invention, le « *traitement UV*» correspond par exemple au passage du substrat à métalliser sous une lampe à Ultra-Violets, dont le spectre d'émission est e.g. de 200 nm à 600 nm, avec un maximum d'énergie à la longueur d'onde 365 nm, par exemple une lampe du type HKJ25® commercialisée par PHILIPS®.

Il est préférable que le traitement mixte UV/Corona de la surface du substrat intervienne juste avant l'étape de métallisation, sans étape intermédiaire. Ainsi, la durée entre le traitement mixte UV/Corona et l'étape de métallisation est e.g. inférieure ou égale à quelques minutes. Par exemple, cette durée est inférieure ou égale à 30 minutes, de préférence inférieure ou égale à 5 minutes et plus préférentiellement inférieure ou égale à 1 minute, voire à quelques secondes.

### DESCRIPTION DETAILLEE DE L'INVENTION

### Substrat :

Dans des conditions préférentielles de mise en oeuvre du procédé ci-dessus décrit, le substrat est un polymère, de préférence choisi parmi :
   I- Les thermoplastiques, avantageusement parmi les thermoplastiques suivants :
      → les polyoléfines : le polystyrène, les copolymères de styrène tels que le poly(styrène-butadiène-styrène) ou SBS, le polypropylène, le polyéthylène ;
      → les polyamides ;
      → les copolymères de l'acrylonitrile :
         - et de l'acrylate de méthyle ;
         - et du méthacrylate de méthyle ;
         - du chlorure de vinyle et du styrène (SAN) ;
         - du butadiène et du styrène (ABS), par exemple celui commercialisé par BAYER® sous la marque NOVODUR® ;
         - du butadiène, du styrène (ABS) et du polycarbonate PC ; ou
   II- Les thermodurcissables avantageusement parmi les thermodurcissables suivants :
      → les polyimides ;
      → les polyesters ;
      → les résines phénoliques ;
      → les époxydes.

### Traitement mixte UV/Corona :

Le traitement mixte UV/Corona est choisi parmi les traitements suivants : une alternance d'un traitement UV et d'un traitement Corona, une simultanéité des traitements UV et Corona, un traitement comprenant une ou plusieurs séquences d'alternance et une ou plusieurs séquences de simultanéité des traitements UV et Corona et leurs combinaisons.

Dans la présente invention, le traitement mixte UV/Corona comprend au moins une alternance d'un traitement UV et d'un traitement Corona.

Lorsque le substrat mis en oeuvre est de l'ABS, de l'ABS-PC ou du polypropylène, l'alternance est de préférence une succession UV puis Corona.

Suivant une caractéristique remarquable de la présente invention, le traitement mixte UV/Corona comprend de 1 à 120 fois une alternance d'un traitement UV d'une durée de 0,01 secondes à 30 minutes et d'un traitement Corona d'une durée de 0,01 secondes à 30 minutes.

De préférence, l'alternance du traitement mixte UV/Corona comprend de 3 à 16 alternances, notamment de 5 à 15 alternances et plus préférentiellement encore de 4 à 14 ; par exemple, 6 ou 12 alternances.

La durée du traitement Corona lors du traitement mixte UV/Corona en alternance est de préférence de 0,1 secondes à 5 minutes, notamment de 0,5 secondes à 2 minutes et plus préférentiellement encore de 1 seconde à 1 minute.

La durée du traitement UV dans l'alternance UV/Corona, est de préférence de 30 secondes à 15 minutes, notamment de 1 à 5 minutes et plus préférentiellement encore de 1 à 2 minutes.

Au sens de la présente invention, la durée du traitement Corona est par exemple la durée pendant laquelle une unité de surface de la surface à traiter est exposée ou est soumise à une décharge Corona à l'aide d'un dispositif Corona dont la sonde (ou tête de décharge) a une surface donnée, par exemple de 10 cm², qui correspond à l'unité de surface à traiter.
Cette durée du traitement Corona peut être e.g. de 1,5 secondes pour une unité de surface de 10 cm² d'une surface plane à traiter de 100 cm². Cela équivaut à un traitement Corona total de toute la surface de 15 secondes, et à un traitement mixte UV/Corona de 75 secondes, correspondant à 60 secondes d'UV et à 15 secondes de Corona.

Selon le procédé de l'invention, l'alternance peut commencer et se terminer de façon indifférente par le traitement Corona ou par le traitement UV lors du traitement mixte UV/Corona par alternance. De préférence, on commence par le traitement UV.

La présente invention a également pour objet un procédé de traitement de surface dans lequel le traitement mixte UV/Corona tel que défini ci-avant est suivi d'une métallisation non électrolytique du substrat ainsi traité.

### Métallisation :

### Premier mode

Dans un premier mode de réalisation du procédé de métallisation tel que décrit ci-dessus, la métallisation non électrolytique est une métallisation non électrolytique par projection d'une ou plusieurs solutions oxydo-réductrices sous forme d'aérosol(s).

On entend par métallisation par projection d'une ou plusieurs solutions oxydo-réductrices sous forme d'aérosol(s) que l'étape de métallisation non électrolytique comprend, dans l'ordre, au minimum les étapes suivantes :
- projection d'une ou plusieurs solutions oxydo-réductrices sous forme d'aérosol(s),
- rinçage.

Au sens de l'invention, on entend par « *une ou plusieurs solutions oxydo-réductrices* » qu'il s'agit e.g. :
- soit d'une seule solution contenant à la fois un ou plusieurs oxydants et un ou plusieurs réducteurs,
- soit de deux solutions : la première contenant un ou plusieurs oxydants et la seconde contenant un ou plusieurs réducteurs,
- soit d'une pluralité de solutions, chacune contenant soit un ou plusieurs oxydants soit un ou plusieurs réducteurs, à la condition qu'il y ait au moins une solution oxydante et au moins une solution réductrice.

Selon une première possibilité, la métallisation non électrolytique par projection d'une ou plusieurs solutions oxydo-réductrices sous forme d'aérosol(s) comprend, dans l'ordre, les étapes suivantes :
- mouillage de la surface,
- projection d'une ou plusieurs solutions oxydo-réductrices sous forme d'aérosol(s),
- rinçage.

Selon une deuxième possibilité, la métallisation non électrolytique par projection d'une ou plusieurs solutions oxydo-réductrices sous forme d'aérosol(s) comprend, dans l'ordre, les étapes suivantes :
- sensibilisation de la surface, de préférence avec une solution de SnCl₂,
- rinçage,
- projection d'une ou plusieurs solutions oxydo-réductrices sous forme d'aérosol(s),
- rinçage.

### Projection :

Les solutions oxydo-réductrices utilisées au cours de la métallisation non électrolytique sont projetées sous forme d'aérosol(s) sur le substrat et sont de préférence obtenues à partir de solutions, avantageusement aqueuses, d'un ou plusieurs cations métalliques oxydants et d'un ou plusieurs composés réducteurs. Ces solutions oxydo-réductrices sont obtenues de préférence par dilution de solutions mères concentrées. Le diluant est de préférence de l'eau.

Il s'ensuit que selon une disposition préférée de l'invention, on réalise l'(ou les) aérosol(s) de projection par nébulisation et/ou atomisation de solution(s) et/ou de dispersion(s), de manière à obtenir un brouillard de gouttelettes de taille inférieure à 100 µm, de préférence à 60 µm, et plus préférentiellement encore de 0,1 à 50 µm.

Dans le procédé selon l'invention, la projection de solutions métalliques a lieu de préférence de manière continue et le substrat est mis en mouvement et soumis à la projection. Par exemple, lorsque le dépôt métallique est à base d'argent, la projection est continue. Pour un dépôt métallique à base de Nickel par exemple, la projection se fait en alternance avec des temps de relaxation.

Dans le procédé de l'invention, la projection a par exemple une durée de 0,5 à 1000 secondes, de préférence de 1 à 800 secondes et plus préférentiellement encore de 2 à 600 secondes pour une surface à métallise de 1 dm². Le substrat peut être mis en rotation au moins partielle au cours de la projection de métallisation.

Suivant une première méthode de projection, on projette simultanément sur la surface à traiter, dans un ou plusieurs aérosols, une ou plusieurs solutions de cation(s) métallique(s) et une ou plusieurs solutions de réducteur(s) de manière continue. Dans ce cas de figure, le mélange entre la solution oxydante et la solution réductrice peut s'effectuer juste avant la formation de l'aérosol de projection ou bien encore par fusion d'un aérosol produit à partir de la solution oxydante et d'un aérosol produit à partir de la solution réductrice, de préférence avant l'entrée en contact avec la surface du substrat à métalliser.

Conformément à une deuxième méthode de projection, on projette successivement, par l'intermédiaire d'un ou plusieurs aérosols, une ou plusieurs solutions de cation(s) métallique(s) puis une ou plusieurs solutions de réducteur(s). En d'autres termes, la projection de la solution oxydo-réductrice est effectuée par projection séparée d'une ou plusieurs solutions d'un ou plusieurs oxydants métalliques et d'une ou plusieurs solutions d'un ou plusieurs réducteurs. Cette deuxième possibilité correspond à une projection alternée de la ou des solutions réductrices et du ou des sels métalliques.

Dans le cadre de la deuxième méthode de projection, l'association de plusieurs cations métalliques oxydants pour former une multicouche de métaux ou d'alliages différents, est telle que les différents sels sont, de préférence, projetés naturellement séparément du réducteur mais également séparément les uns des autres et successivement. Il va de soi qu'outre la nature différente des cations métalliques, il est envisageable d'utiliser des contre-anions différents entre eux.

Selon une variante de l'étape de projection, on fait en sorte que le mélange du ou des oxydants et du ou des réducteurs soit métastable et, après projection du mélange, on active ce dernier, de sorte que se déclenche la transformation en métal, de préférence par mise en contact avec un amorceur, avantageusement apporté par l'intermédiaire d'un ou plusieurs aérosols, avant, pendant ou après la projection du mélange réactionnel. Cette variante permet de pré-mélanger l'oxydant et le réducteur tout en retardant leur réaction jusqu'à ce qu'ils tapissent la surface du substrat après projection. L'amorçage ou l'activation de la réaction est ensuite obtenu par tout moyen physique (température, UV...) ou chimique approprié.

Au-delà des considérations méthodologiques présentées ci-dessus et illustrées ci-après dans les exemples, il convient de donner quelques informations plus précises quant aux produits mis en oeuvre dans le procédé selon l'invention.

L'eau apparaît comme étant le solvant le mieux adapté, sans exclure toutefois la possibilité d'utiliser des solvants organiques, pour la production des solutions à partir desquelles seront produits les aérosols projetés.

Les solutions oxydo-réductrices projetées au cours de l'étape de métallisation du substrat sont une ou plusieurs solutions d'un oxydant métallique et une ou plusieurs solutions d'un réducteur.

Les concentrations en sels métalliques dans la solution oxydante à projeter sont de 0,1 g/l à 100 g/l et de préférence de 1 à 60 g/l, et les concentrations en sels métalliques des solutions mères sont de 0,5 g/l à 10³ g/l, ou bien le facteur de dilution des solutions mères est de 5 à 500. Avantageusement, les sels métalliques sont choisis parmi les composés suivants : le nitrate d'argent, le sulfate de nickel, le sulfate de cuivre, le chlorure d'étain, et leurs mélanges.

La sélection des réducteurs est faite de préférence parmi les composés suivants : le borohydrure, le diméthylaminoborane, l'hydrazine, l'hypophosphite de sodium, le formol, l'aluminohydrure de lithium, les sucres réducteurs comme le glucose et l'erythorbate de sodium, et leurs mélanges. La sélection du réducteur impose de tenir compte du pH et des propriétés visées pour le film de métallisation. Ces ajustements de routine sont à la portée de l'homme du métier. Les concentrations en réducteur dans la solution réductrice à projeter sont de 0,1 g/l à 100 g/l et de préférence de 1 à 60 g/l et les concentrations en réducteur des solutions mères sont de 0,5 g/l à 10³ g/l, ou bien le facteur de dilution des solutions mères est de 5 à 100.

Selon une disposition particulière de l'invention, des particules sont incorporées à au moins l'une des solutions oxydo-réductrices pour être projetées au moment de la métallisation. Les particules sont ainsi piégées dans le dépôt métallique. Ces particules dures sont par exemple du diamant, de la céramique, des nanotubes de carbone, des particules métalliques, des oxydes de terres rares, du PTFE (Polytétrafluoroethylène), du graphite, des oxydes métalliques et leurs mélanges. L'incorporation de ces particules au film métallique confère des propriétés mécaniques et esthétiques particulières au substrat métallisé.

### Rinçage :

Avantageusement, l'étape de rinçage, c'est-à-dire la mise en contact de tout ou partie de la surface du substrat avec une ou plusieurs sources de liquide de rinçage, est réalisée par projection d'un aérosol de liquide de rinçage, de préférence de l'eau.

### Mouillage :

L'étape préalable de mouillage ci-dessus évoquée consiste à revêtir d'un film liquide la surface du substrat. Le choix du liquide de mouillage s'effectue dans le groupe suivant : l'eau désionisée ou non, éventuellement additionnée avec un ou plusieurs tensioactifs anioniques, cationiques ou neutres, une solution alcoolique comprenant un ou plusieurs alcools (par exemple l'isopropanol, l'éthanol) et leurs mélanges. Notamment, on choisit, comme liquide de mouillage, de l'eau désionisée additionnée avec un tensioactif anionique et de l'éthanol. Dans une variante de mouillage selon laquelle on transforme le liquide de mouillage en vapeur que l'on projette sur le substrat sur lequel elles condensent, il est préférable que le liquide soit essentiellement aqueux pour des raisons évidentes de convenance industrielle. La durée de mouillage dépend de la surface du substrat considérée et du débit de projection de l'aérosol de mouillage.

### Sensibilisation :

Selon un mode de réalisation particulier de l'invention, une étape de sensibilisation de la surface du substrat peut être mise en oeuvre au moyen d'une solution de sensibilisation, notamment de chlorure stanneux, par exemple conformément au mode de mise en oeuvre décrit dans FR-A-2 763 962. Dans ce cas, une étape de rinçage à l'aide d'un liquide de rinçage tel que décrit plus haut est réalisée juste après l'étape de sensibilisation, sans étape intermédiaire.

### Traitement thermique:

Selon ce premier mode, le substrat métallisé peut être soumis à un traitement thermique juste après l'étape de rinçage qui suit l'étape de projection, afin de renforcer l'adhérence.

Le traitement thermique a lieu de préférence dans un four ou tunnel InfraRouge à une température de 50 °C à 150 °C, plus préférentiellement de 60 °C à 120 °C et encore plus préférentiellement d'environ 100 °C, pendant une durée de 5 minutes à 3 heures, préférentiellement de 15 min à 90 min et plus préférentiellement d'environ 60 min. Le traitement thermique peut aussi être un séchage qui consiste en l'évacuation de l'eau de rinçage. Il peut avantageusement être réalisé à une température de 20 °C à 40 °C à l'aide par exemple d'un système air comprimé pulsé à 5 bars/air pulsé à une température de 20 °C à 40 °C.

Tous les modes de réalisation de l'étape de métallisation non électrolytique par projection d'une ou plusieurs solutions oxydo-réductrices sous forme d'aérosol(s) au sens de l'invention sont plus précisément décrits dans FR-A-2 763 962 et la demande de brevet français déposée sous le numéro 06 10287.

### Second mode

Selon un second mode de réalisation du procédé de métallisation tel que décrit ci-dessus, la métallisation non électrolytique est une métallisation non électrolytique par immersion dans un ou plusieurs bains contenant une ou plusieurs solutions oxydo-réductrices. Ce procédé est appelé « *gamme chimique* » par l'homme du métier.

On entend par métallisation non électrolytique par immersion dans un ou plusieurs bains contenant une ou plusieurs solutions oxydo-réductrices, que la métallisation non électrolytique comprend, dans l'ordre, au minimum les étapes suivantes :
- sensibilisation de la surface, de préférence avec une solution de SnCl₂,
- activation de la surface, de préférence avec une solution de PdCl₂,
- rinçage avec de l'acide chlorhydrique ou de la soude,
- immersion du substrat dans un ou plusieurs bains de solutions oxydo-réductrices,
- rinçage.

De préférence, l'immersion des pièces à traiter se fait dans un bain contenant principalement trois agents : un sel métallique, un réducteur et un complexant qui évite la réduction spontanée et la précipitation du bain.

Tous les modes de réalisation de l'étape de métallisation non électrolytique par immersion dans un ou plusieurs bains contenant une ou plusieurs solutions oxydo-réductrices au sens de l'invention sont plus précisément décrits dans FR 2 719 839.

Selon un mode préféré de réalisation du procédé, le dépôt métallique réalisé est un dépôt de nickel chimique. Par exemple, pour un tel dépôt on peut utiliser des solutions chimiques et oxydo-réductrices de la gamme ATOTECH® :
- pour l'activation, on peut choisir les solutions de la gamme FUTURON®,
- pour la métallisation au nickel par voie chimique, on peut choisir les solutions de la gamme NOVIGANTH AK®.

### Couche de finition :

Selon un mode particulier de l'invention, le procédé comprend en outre et après l'étape de métallisation non électrolytique, une étape de réalisation d'une couche de finition.

L'étape de réalisation d'une couche de finition est de préférence la réalisation d'un épaississement électrolytique de la surface métallisée. L'épaississement électrolytique se fait de préférence par immersion du substrat au moins partiellement métallisé dans un bain d'une solution contenant des électrolytes et par passage d'un courant électrique suffisant entre une électrode présente dans le bain électrolytique et le substrat au moins partiellement métallisé. Dans le cadre de l'invention, les électrolytes sont des ions métalliques aptes à se déposer sur la surface métallisée du substrat, par exemple choisis parmi les ions des métaux suivants : chrome, nickel, argent ou cuivre, comme Cr⁶⁺, Ni²⁺, Ag⁺ et Cu²⁺. Il peut y avoir un empilement de plusieurs couches métalliques réalisées par étapes successives comme par exemple un épaississement de cuivre suivi par une couche de nickel et une couche finale de chrome. La technique de l'épaississement électrolytique est bien connue de l'homme du métier. Par exemple, la quantité de courant nécessaire à la réalisation d'une couche de cuivre de 1 µm sur un substrat ayant une surface métallisée de 1 dm² est de 0,5 à 20 A.s, à partir d'une solution d'ions Cu²⁺ à 250 g/l. Généralement, l'épaisseur de la couche de finition réalisée par épaississement électrolytique est de 2 à 40 µm. Lorsque la couche de finition est réalisée par épaississement électrolytique, le substrat est de préférence partiellement métallisé. La métallisation partielle est possible notamment par masquage d'une partie de la surface du substrat avant métallisation.

Dans le procédé de métallisation selon l'invention et de préférence dans le premier mode de réalisation de la métallisation, les effluents issus des différentes étapes du procédé sont avantageusement retraités et recyclés pour être réutilisés dans le procédé, et pour limiter l'impact écologique.

Dans le procédé de métallisation ci-dessus décrit et selon le premier mode de réalisation, le retraitement et le recyclage des effluents comprennent, dans l'ordre les étapes suivantes :
- récupération des effluents, notamment des eaux souillées, dans un conteneur,
- éventuellement ajout d'un floculant,
- éventuellement décantation,
- éventuellement séparation du filtrat et des boues, notamment par filtration,
- éventuellement neutralisation du filtrat, notamment élimination de l'ammoniac, par ajout d'acide en contrôlant le pH,
- distillation du filtrat, de préférence dans un évaporateur,
- éventuellement passage sur un système de charbon actif,
- réutilisation du distillat dans le procédé de métallisation par exemple comme eau de rinçage ou comme diluant des solutions mères oxydo-réductrices ou rejet à l'égout.

Le floculant ajouté aux effluents est de préférence un polymère organique chargé, comme ceux commercialisés par SNF FLOERGER®.

La séparation du surnageant et des boues se fait avantageusement par filtration sur fritté, ou par débordement.

Les boues peuvent alors être évacuées et acheminées vers un centre spécialisé de retraitement ou de revalorisation des déchets.

Le filtrat obtenu peut être neutralisé, notamment par ajout d'une solution d'acide de normalité de 0,1 N à 10 N et jusqu'à ce que le filtrat atteigne un pH de 5 à 6. Les acides utilisés pour neutraliser notamment l'ammoniac présent dans le filtrat sont choisis parmi l'acide chlorhydrique, l'acide sulfurique, l'acide nitrique et leurs mélanges.

La distillation du filtrat est réalisée de préférence au moyen d'un évaporateur, et le filtrat est chauffé à une température de 90 à 120°C. Le résidu resté au fond du bouilleur en fin de distillation est évacué pour être acheminé vers un centre spécialisé de retraitement ou de revalorisation des déchets. L'eau distillée peut être réutilisée dans le procédé de métallisation, et notamment pour la dilution des solutions mères ainsi que pour les étapes de rinçage et de mouillage.

Les avantages du procédé selon l'invention sont nombreux. Le traitement de la surface, permet de contrôler la réaction de métallisation et d'améliorer l'adhésion du film métallique à la surface. Aucun produit chimique n'est utilisé pour le traitement mixte UV/Corona. De plus, les effluents de la métallisation, rejetés par le procédé, qui représentent, à l'échelle industrielle, plus d'une tonne par jour, sont retraités et réutilisés dans le procédé. L'eau distillée qui sort du module de retraitement est pure et peut être utilisée telle quelle pour la dilution des solutions mères d'oxydant et de réducteur, ainsi que pour le rinçage et le mouillage. Cet avantage est non négligeable, d'une part, d'un point de vue économique, car la consommation d'eau est significativement réduite, et, d'autre part, et d'un point de vue écologique, car la quantité de déchets à évacuer est considérablement diminuée. Il est important de remarquer que l'eau industrielle n'est pas utilisable dans le procédé, et qu'une étape de purification serait nécessaire si le procédé ne disposait pas d'un module de retraitement des effluents et de purification de l'eau souillée. En outre, le procédé utilise des solutions mères concentrées qui sont diluées sur place juste avant la métallisation. Le volume de solutions mères à transporter est donc moindre que si les solutions étaient déjà diluées, ce qui diminue les coûts, notamment de transport.

Par ailleurs, les quantités de réducteur utilisées sont inférieures à la norme autorisée (ISO 14001), ce composé étant toxique pour l'environnement, la diminution des quantités utilisées représente un avantage écologique important.

En outre, l'épaississement électrolytique qui peut être réalisé, présente l'avantage d'être sélectif: il n'a lieu que sur la surface métallisée du substrat, ce qui permet de créer des motifs métallisés en relief, comme des pistes conductrices.

La présente demande a aussi pour objet un procédé de traitement de surface incluant un traitement mixte UV/Corona et une métallisation des substrats, tel que défini dans la description ci-dessus, dans lequel on traite en ligne sans rupture de chaîne, une pluralité de substrats. Notamment, le procédé ne nécessite aucune manipulation humaine, mises à part les étapes de chargement du substrat à métalliser et de déchargement du substrat métallisé.

Le procédé décrit ci-dessus est avantageusement mis en oeuvre au moyen d'un dispositif industriel de métallisation qui comprend les éléments suivants :
■ au moins un module de traitement de surface mixte UV/Corona,
■ au moins un module de métallisation non électrolytique.

Selon un mode préféré de l'invention, le dispositif industriel pour la mise en oeuvre du procédé décrit ci-dessus comprend en outre les éléments suivants :
■ au moins un module de réalisation d'une couche de finition,
■ au moins un module de retraitement et de recyclage des effluents.

Le module de traitement de surface mixte UV/Corona comprend une ou plusieurs têtes à décharge Corona et une ou plusieurs lampes UV. Il peut s'agir par exemple d'un tunnel à décharge Corona commercialisé par la société DMG® sous le nom C22® et d'une lampe UV de référence HK125e de la marque PHILIPS®.

Le module de métallisation non électrolytique comprend des moyens de métallisation non électrolytique qui sont soit des moyens courants de projection de solutions, notamment ceux décrits dans FR-A-2 763 962, soit des moyens d'immersion comme des lignes de galvanoplastie par cuves.

Les moyens de projection comprennent par exemple une série de pistolets «*grand volume et basse pression*» HVLP (High Volume Low Pressure) de projection, lesdits pistolets étant chacun reliés à une ou plusieurs pompes alimentées par une solution. Un premier système pompe/pistolet est prévu pour l'étape de mouillage. Un second système pompe/pistolet est prévu pour l'étape de sensibilisation et un troisième pour le rinçage. La projection des solutions métalliques d'oxydant et de réducteur se fait à l'aide d'au moins deux systèmes pompe/pistolet : l'un pour la solution d'oxydant et l'autre pour la solution de réducteur. Pour la projection de la solution oxydante, le nombre de pistolets est de 1 à 30 pistolets reliés à au moins une pompe. Il en est de même pour la projection de la solution de réducteur qui compte de 1 à 30 pistolets. Un dernier système pompe/pistolet est prévu pour le rinçage après la projection des solutions de métallisation.

Les moyens d'immersion sont par exemple des conteneurs (cuves ou bacs) dans lesquels sont placées des solutions liquides. Les lignes utilisées sont par exemple du type de celles commercialisées par la société CORELEC®.

Le module de métallisation non électrolytique peut comprendre aussi des moyens de traitement thermique du film métallique, par exemple à l'aide d'un four ou d'un tunnel IR, ou un système air comprimé pulsé à 5 bars/air pulsé à température comprise entre 20 et 40 °C.

Le module de réalisation d'une couche de finition comprend des moyens de réalisation d'un épaississement électrolytique de la surface métallisée, notamment un bain électrolytique rempli de solution contenant des électrolytes, au moins une électrode et un dispositif permettant la circulation d'un courant électrique.

Lorsque le dispositif selon l'invention utilise des moyens de métallisation non électrolytique qui sont des moyens courants de projection de solutions, alors le dispositif peut, en outre, être équipé d'un module de retraitement et de recyclage des effluents.

Ce module de retraitement et de recyclage des effluents comprend des moyens de récupération des effluents qui sont par exemple des canaux récupérateurs, comme des écrans à chicane, qui dirigent les effluents vers un conteneur de récupération, et qui ont pour but de protéger la mécanique du convoyeur sur lequel sont disposés les substrats à métalliser.

Ce module de retraitement et de recyclage des effluents comprend aussi :
- des moyens de décantation et de séparation du filtrat et des boues, par exemple un décanteur ou un dispositif à débordement,
- et des moyens de distillation, par exemple à l'aide d'appareillages comprenant un ou plusieurs bouilleurs et une ou plusieurs colonnes réfrigérées.

Lorsque les effluents sont retraités, l'eau purifiée est acheminée vers les différents modules du procédé pour être réutilisée, grâce à des moyens d'acheminement de liquide, par exemple des conduits et des pompes.

Selon un mode de réalisation préféré du dispositif de l'invention, les substrats à métalliser sont placés sur un moyen de déplacement des substrats d'un module à un autre. In s'agit par exemple d'un convoyeur, notamment à bande et à picots, lorsqu'on utilise un module de métallisation comprenant des moyens de projection. Il s'agit par exemple d'une balancelle lorsque le module de métallisation est constitué de moyens d'immersion.

De préférence, le moyen de déplacement des substrats est équipé de moyens de mise en rotation des substrats sur eux-mêmes.

La présente invention vise aussi un substrat métallisé obtenu par le procédé tel que décrit plus haut, le substrat étant notamment une pièce d'automobile ou pour l'aéronautique.

La présente invention a également pour objet un substrat métallisé obtenu par le procédé tel que décrit précédemment, le substrat étant notamment une pièce pour l'électronique telle une piste conductrice, une antenne d'étiquette radiofréquence (RFID: radio frequency identification).

L'invention sera mieux comprise à la lecture de la description qui suit d'exemples de mise en oeuvre du procédé et de réalisation du dispositif concernés, en référence aux dessins annexés sur lesquels :
- la figure 1 représente un schéma global d'un mode de réalisation du procédé de métallisation selon l'invention,
- la figure 2 représente un schéma d'un dispositif selon l'invention,
- la figure 3 représente une vue en coupe transversale d'un substrat métallisé par le procédé selon l'invention,
- la figure 4 représente une vue en coupe transversale d'un autre substrat métallisé par le procédé selon l'invention.

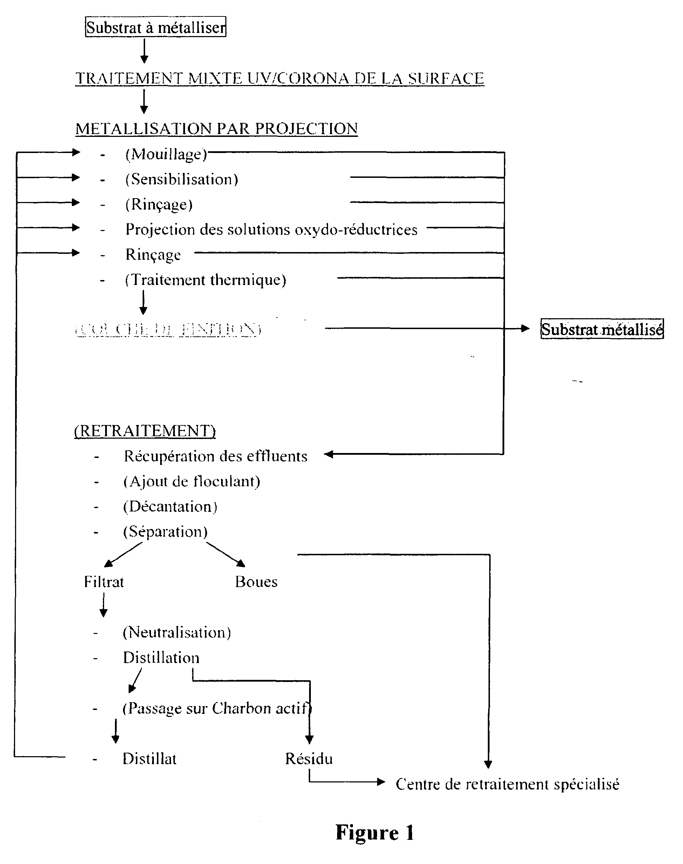

Sur la figure 1 est représenté un schéma récapitulatif des étapes essentielles et optionnelles d'un mode de réalisation du procédé de métallisation selon l'invention.

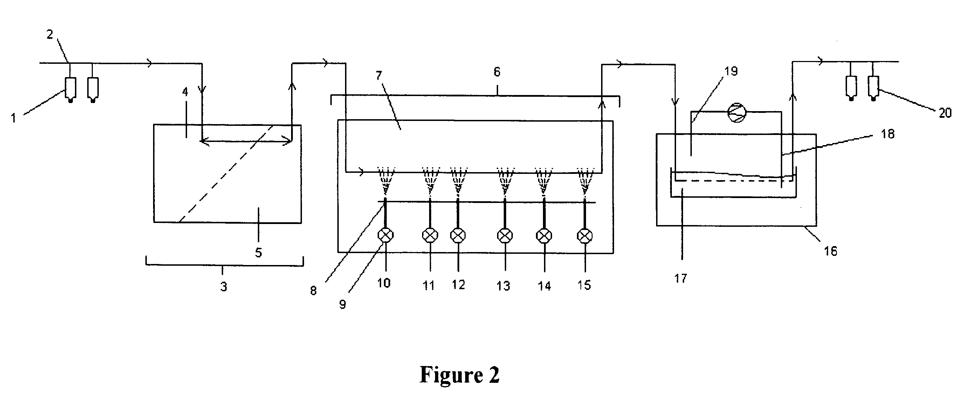

La figure 2 est une représentation schématique d'un dispositif pour réaliser un procédé conforme à l'invention.

Ce dispositif comprend les trois modules suivants :
■ un module de traitement mixte UV/Corona 3,
■ un module de métallisation non électrolytique 6,
■ un module optionnel de réalisation d'une couche de finition 16.

Le module de traitement mixte UV/Corona 3 comprend une cabine de traitement UV 4 et une cabine de traitement Corona 5.

Le module de métallisation non électrolytique 6 comporte une zone de projection 7 équipée de pistolets 8 reliés à des pompes 9, chacune des pompes 9 étant reliée à un bac de solution qui lui est propre. La pompe 10 est réservée au mouillage de la surface. La pompe 11 est prévue pour l'étape de sensibilisation de la surface du substrat et la pompe 12 pour le rinçage. Les pompes 13 et 14 sont des pompes reliées aux solutions oxydo-réductrices. La pompe 15 est une pompe de rinçage.

Le module optionnel de réalisation d'une couche de finition 16 est une cabine d'épaississement électrolytique constituée d'un conteneur contenant une solution électrolytique 17 et d'électrodes 18 et 19 entre lesquelles circule un courant suffisant pour réaliser un épaississement électrolytique. L'électrode 18 plonge dans le bain de solution électrolytique et l'électrode 19 est reliée au substrat métallisé.

Au cours d'un procédé utilisant ce dispositif, le substrat à métalliser 1 est placé sur une balancelle 2 qui l'achemine vers le module de traitement mixte UV/Corona 3 où il est soumis à un traitement mixte UV/Corona au moyen des cabines de traitement UV 4 et Corona 5. A ce stade, la balancelle 2 effectue des allers-retours entre les cabines de traitement UV 4 et Corona 5 de sorte à réaliser une alternance.

Le substrat ainsi traité est ensuite acheminé vers le module de métallisation non électrolytique 6 installé à la suite du module de traitement mixte UV/Corona 3. Dans la zone de projection 7, la pompe 10 réalise le mouillage de la surface, par exemple avec de l'eau. Puis la pompe 11 projette une solution de chlorure stanneux. Cette sensibilisation est suivie d'une étape de rinçage, par exemple avec de l'eau, au moyen de la pompe 12. Les pompes 13 et 14 projettent ensuite les solutions oxydo-réductrices nécessaires à la réalisation du film métallique. La pompe 13 est par exemple reliée à la solution d'ions métalliques et la pompe 14 est reliée à la solution de réducteur. L'actionnement de ces pompes peut être simultané ou consécutif. A la suite de la métallisation, une étape de rinçage est prévue au moyen de la pompe 15 reliée à une solution de liquide de rinçage, par exemple de l'eau.

Le substrat ainsi métallisé est enfin dirigé vers le module optionnel de réalisation d'une couche de finition 16 dans lequel le substrat est soumis à un épaississement électrolytique. Le substrat est plongé dans le bain de solution électrolytique, l'électrode 18 est plongée dans le bain de solution électrolytique, l'électrode 19 est reliée au substrat métallisé et l'on fait circuler un courant entre les deux électrodes.

Le substrat métallisé 20 par le procédé selon l'invention peut être déchargé après la réalisation de la couche de finition.

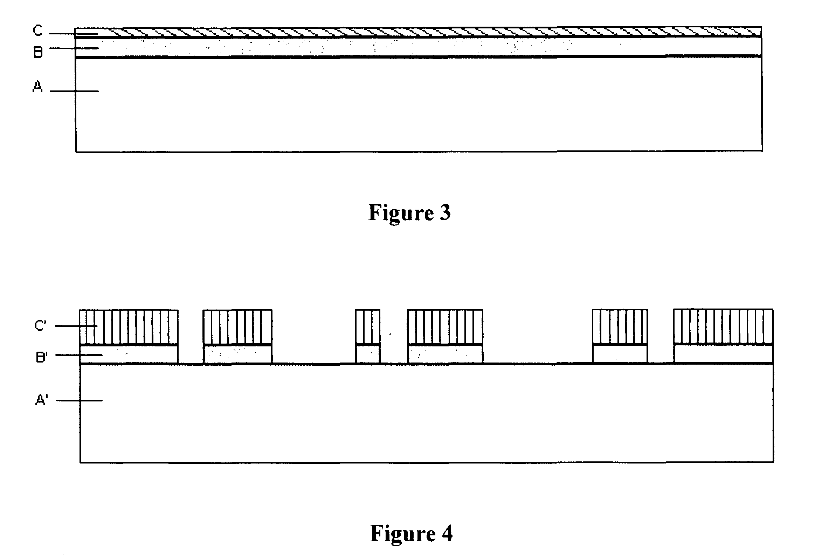

Les figures 3 et 4 représentent chacune une vue schématique en coupe transversale d'un substrat métallisé par un mode de réalisation du procédé de l'invention.

Sur la figure 3, le substrat métallisé est constitué de 3 couches A, B et C. La couche A représente le substrat, par exemple un substrat en ABS, la couche B est le film métallique, par exemple un film de chrome, et la couche C est le résultat d'un épaississement électrolytique dans un bain contenant du sulfate de nickel.

Sur la figure 4, le substrat métallisé est aussi constitué de 3 couches appelées A', B' et C'. A' représente un substrat, par exemple un ABS-PC. La couche B' est une couche métallique, par exemple de nickel, obtenue par métallisation avec masquage d'une partie de la surface. La couche C' est une couche de cuivre, qui est le résultat d'un épaississement électrolytique dans un bain contenant du sulfate de cuivre. Le dépôt de cette couche C' est sélectif et a lieu uniquement sur la surface de la couche B'.

### EXEMPLES

### Exemple 1 : Métallisation chrome d'un substrat en ABS

Une pièce en forme en ABS NOVODUR® de BAYERCR®, de l'ordre de 10 cm de longueur par 10 cm de largeur et de 1 cm d'épaisseur, est mise en rotation sur une plaque tournante à 0,5 rpm. On traite ensuite la pièce en rotation par un traitement UV/Corona en alternance selon les conditions suivantes :
■ 1 minute sous une lampe UV HK125® (125 mW) de PHILIPS® ayant un spectre d'émission de longueur d'onde de 200-600 nm (pic à 365 nm),
■ 1 minute de décharge Corona de 32 kW avec un appareil C22® de DMG® répartie sur l'ensemble de la surface. La sonde de l'appareil est équipée de deux électrodes et a une surface de 10 cm². Donc chaque 10 cm² de la pièce est soumis à une décharge Corona pendant 1,6 secondes. La sonde est placée à 10 mm de la surface et effectue le balayage de la totalité de la surface en 1 minute,
■ on répète 6 fois cette alternance.

La pièce ainsi traitée est placée au sein d'un module de métallisation non électrolytique par projection dans lequel il est soumis successivement :
■ à un mouillage par projection d'eau pendant 5 secondes,
■ à une projection d'une solution aqueuse de sel de nickel (NiS0₄) de concentration de 7 g/l simultanément avec la projection d'une solution aqueuse de borohydrure de sodium à 10 g/l pendant 600 secondes de manière alterné avec des temps de relaxation,
■ à un rinçage à l'eau pendant 10 secondes.

On obtient ainsi une pièce en ABS avec un primaire métallique à base de nickel de conduction électrique sur laquelle on effectue une gamme de finition par épaississement électrolytique selon un protocole et à l'aide d'un matériel et de produits connus en soi. Cet épaississement est constitué par les couches successives suivantes: cuivre (20 microns) + nickel (5 microns) + chrome (0,5 microns).

La pièce en ABS avec un primaire métallique Ni est donc pour ce faire successivement immergée :
- dans un bain de solution électrolytique d'ions cuivre, commercialisée sous la dénomination CUPRACIDE ULTRA® de la société ATOTECH® (courant 2 A, 700 s),
- dans un bain de solution électrolytique d'ions nickel, commercialisée sous la dénomination NiMAC® par la société MACDER-MID® (courant 2 A, 150 s),
- puis dans un bain de solution électrolytique d'ions chrome, commercialisée sous la dénomination MACROME 8210-gamme CHROME® par la société MACDERMID®, avec un courant d'intensité suffisante et une durée suffisante pour obtenir la couche de 0,5 µm.

### Exemple 2 : Métallisation au nickel d'une pièce en ABS-PC

Une pièce en ABS-PC de chez BAYER®, de 10 cm de longueur par 10 cm de largeur et de 1 cm d'épaisseur, et dont une partie de la surface est masquée de sorte à réaliser un motif de circuit imprimé, est mise en rotation sur une plaque tournante à 5 rpm. On traite ensuite la pièce en rotation par un traitement UV/Corona en alternance selon les conditions suivantes :
■ 2 minutes sous une lampe UV HK125® (125 mW) de PHILIPS® ayant un spectre d'émission de longueur d'onde de 200-600 nm (pic à 365 nm),
■ 1 minute de décharge Corona de 32 Volts avec un appareil C22® de DMG® sur l'ensemble de la surface. La sonde de l'appareil est équipée de deux électrodes. La sonde est placée à 10 mm de la surface.
■ On répète 12 fois cette alternance.

La pièce ainsi traitée est placée au sein d'un module de métallisation non électrolytique dans lequel il est soumis successivement :
■ à une sensibilisation de la surface par projection d'une solution de chlorure stanneux pendant 5 secondes,
■ à un rinçage de la solution de sensibilisation par projection d'eau pendant 10 secondes,
■ à une projection d'une solution aqueuse à base de nitrate d'argent ammoniacal de concentration de 3 g/l simultanément de la projection d'une solution aqueuse à base de glucose à 10 g/l pendant 30 secondes,
■ à un rinçage à l'eau pendant 25 secondes.

Le masquage d'une partie de la surface est retiré.

La pièce ainsi partiellement métallisée est immergée dans un bain électrolytique de solution d'ions cuivre, commercialisée sous la dénomination CUPRACIDE ULTRA® par la société ATOTECH®. Une électrode est placée dans le bain et un courant de 2 A est appliqué entre l'électrode et le substrat. La durée de l'électrolyse est de 700 secondes et l'épaississement est de 20 microns.

On obtient ainsi une pièce en ABS-PC métallisée et épaissie par du cuivre.

On effectue sur cette pièce un test normalisé Peel Test ASTM B533. On obtient une valeur moyenne de 0,7 N/mm.

### Exemple 3 : Métallisation primaire cuivre d'une pièce en ABS

Une pièce en ABS de gamme NOVODUR® de chez BAYER®, de 10 cm de longueur par 10 cm de largeur et de 1 cm d'épaisseur, et dont une partie de la surface est masquée de sorte à réaliser un motif de circuit imprimé, est mise en rotation sur une plaque tournante à 5 rpm. On traite ensuite la pièce en rotation par un traitement UV/Corona en alternance selon les conditions suivantes :
■ 2,5 minutes sous une lampe UV HK125® (125 mW) de PHILIPS® ayant un spectre d'émission de longueur d'onde de 200-600 nm (pic à 365 nm),
■ 2 minutes de décharge Corona de 32 Volts avec un appareil C22® de DMG® sur l'ensemble de la surface. La sonde de l'appareil est équipée de deux électrodes. La sonde est placée à 10 mm de la surface.
■ On répète 12 fois cette alternance.

La pièce ainsi traitée est placée au sein d'un module de métallisation non électrolytique dans lequel elle est soumise successivement :
■ à une activation au colloïde de palladium de la gamme FUTURON® d'ATOTECH® pendant 7 minutes,
■ à un rinçage à l'eau pendant 25 secondes,
■ à une métallisation par bain chimique de nickel de la gamme NOVOGANTH AK® d'ATOTECH® pendant 15min,
■ à un rinçage en bain d'eau pendant 30 secondes.

La pièce ainsi métallisée (sous couche de nickel) est immergée dans un bain électrolytique de solution d'ions cuivre à 250 g/l. Une électrode est placée dans le bain et un courant de 2 A est appliqué entre l'électrode et le substrat. La durée de l'électrolyse est de 700 secondes et l'épaississement est de 20 microns. On complète la gamme par un dépôt électrolytique de nickel de 5 microns et une couche de chrome de 0,5 microns. Cet épaississement cuivre/nickel/chrome est réalisé de la même façon qu'à l'exemple 1.

On obtient ainsi une pièce en ABS métallisée chrome pour des applications notamment dans le domaine automobile.

On effectue un test normalisé Peel Test ASTM B533 sur la pièce ainsi obtenue. On obtient une valeur moyenne de 0,75 N/mm.

## Revendications

1. Procédé de traitement de surface d'un substrat polymère **caractérisé en ce qu'**il comprend un traitement mixte UV/Corona de la surface du substrat suivi d'une métallisation non électrolytique du substrat ainsi traité.

2. Procédé de traitement de surface selon la revendication 1, caractérisé en que le traitement mixte UV/Corona est choisi parmi les traitements suivants : une alternance d'un traitement UV et d'un traitement Corona, une simultanéité des traitements UV et Corona, un traitement comprenant une ou plusieurs séquences d'alternance et une ou plusieurs séquences de simultanéité des traitements UV et Corona et leurs combinaisons.

3. Procédé de traitement de surface selon la revendication 1, **caractérisé en ce que** le substrat polymère est choisi parmi :
I- Les thermoplastiques, avantageusement parmi les thermoplastiques suivants :
→ les polyoléfines : le polystyrène, les copolymères de styrène tels que le poly(styrène-butadiène-styrène) ou SBS, le polypropylène, le polyéthylène ;
→ les polyamides ;
→ les copolymères de l'acrylonitrile :
• et de l'acrylate de méthyle ;
• et du méthacrylate de méthyle ;
• du chlorure de vinyle et du styrène (SAN) ;
• du butadiène et du styrène (ABS) ;
• du butadiène, du styrène (ABS) et du polycarbonate PC ; ou
II- Les thermodurcissables avantageusement parmi les thermodurcissables suivants :
→ les polyimides ;
→ polyesters ;
→ les résines phénoliques ;
→ les époxydes.

4. Procédé de traitement de surface selon l'une des revendications précédentes, caractérisé en que le traitement mixte UV/Corona comprend au moins une alternance d'un traitement UV et d'un traitement Corona.

5. Procédé de traitement de surface selon la revendication 1, caractérisé en que le traitement mixte UV/Corona comprend de 1 à 120 fois une alternance d'un traitement UV d'une durée de 0,01 seconde à 30 minutes et d'un traitement Corona d'une durée de 0,01 secondes à 30 minutes.

6. Procédé de traitement de surface selon l'une des revendications 1 à 5, **caractérisé en ce que** la métallisation non électrolytique est une métallisation non électrolytique par projection d'une ou plusieurs solutions oxydo-réductrices sous forme d'aérosol(s).

7. Procédé de traitement de surface selon l'une des revendications 1 à 5, **caractérisé en ce que** la métallisation non électrolytique est une métallisation non électrolytique par immersion dans un ou plusieurs bains de solutions oxydo-réductrices.

8. Procédé de traitement de surface selon l'une des revendications 1 à 7, **caractérisé en ce que** les effluents sont retraités et recyclés et **en ce que** le retraitement et le recyclage des effluents comprennent, dans l'ordre, les étapes suivantes :
- récupération des effluents dans un conteneur,
- distillation dans un évaporateur,
- réutilisation du distillat dans le procédé de métallisation ou rejet à l'égout.

9. Procédé de traitement de surface selon l'une des revendications 1 à 8, **caractérisé en ce que** l'on traite en ligne sans rupture de chaîne, une pluralité de substrats.

10. Dispositif pour la mise en oeuvre du procédé tel que défini à l'une quelconque des revendications 1 à 9, **caractérisé en ce qu'**il comprend les éléments suivants :
■ au moins un module de traitement de surface mixte UV/Corona,
■ au moins un module de métallisation.

## Claims

1. Method for treating a polymer substrate surface **characterized in that** it comprises a combined UV/Corona treatment of the substrate surface followed by a non-electrolytic metallization of the substrate which has been treated.

2. Method for surface treatment according to claim 1, **characterized in that** the combined UV/Corona treatment is selected from the following treatments: an alternation of a UV treatment and a Corona treatment, a simultaneity of UV and Corona treatments, a treatment comprising one or more alternation sequences and one or more simultaneous sequences of UV and Corona treatments and combinations thereof.

3. Method for surface treatment according to claim 1, **characterized in that** the polymer substrate is selected from:
I- Thermoplastics, advantageously from the following thermoplastics:
→ polyolefins: polystyrene, copolymers of styrene such as poly(styrene-butadiene-styrene) or SBS, polypropylene, polyethylene ;
→ polyamides ;
→ copolymers of acrylonitrile:
• and of methyl acrylate;
• and of methyl methacrylate;
• of vinyl chloride and of styrene (SAN);
• of butadiene and of styrene (ABS);
• of butadiene, of styrene (ABS) and of polycarbonate PC; or
II- Thermosetting polymers advantageously from the following thermosetting polymers:
→ polyimides;
→ polyesters;
→ phenolic resins;
→ epoxides.

4. Method for surface treatment according to one of the previous claims, **characterized in that** the combined UV/Corona treatment comprises at least one alternation of a UV treatment and a Corona treatment.

5. Method for surface treatment according to claim 1, **characterized in that** the combined UV/Corona treatment comprises 1 to 120 times the alternation of a 0.01 second to 30 minute UV treatment with a 0.01 second to 30 minute Corona treatment.

6. Method for surface treatment according to one of the claims 1 to 5, **characterized in that** the non-electrolytic metallization is a non-electrolytic metallization by spraying of one or more redox solutions in the form of aerosol(s).

7. Method for surface treatment according to one of the claims 1 to 5, **characterized in that** the non-electrolytic metallization is a non-electrolytic metallization by immersion of the substrate in one or more baths of redox solutions.

8. Method for surface treatment according to one of the claims 1 to 7, **characterized in that** the effluents are retreated and recycled and **in that** the retreatment and the recycling of the effluents comprise, in this order, the following steps:
- recuperation of the effluents in a container,
- distillation in an evaporator,
- use of the distillate in the method for metallization or disposal to the sewer.

9. Method for surface treatment according to one of the claims 1 to 8, **characterized in that** a plurality of substrates are treated in line without breaking the chain.

10. Device for the implementation of the method as described in any of the claims 1 to 9, **characterized in that** it comprises the following elements:
■ at least one module for a combined UV/Corona surface treatment,
■ at least one metallization module.

## Patentansprüche

1. Verfahren zur Behandlung einer Oberfläche eines Polymersubstrats, **dadurch gekennzeichnet, dass** das Verfahren eine gemischte UV/Corona-Behandlung der Oberfläche des Substrats umfasst, an die sich eine nichtelektrolytische Metallisierung des so behandelten Substrats anschließt.

2. Verfahren zur Behandlung einer Oberfläche nach Anspruch 1, **dadurch gekennzeichnet, dass** die gemischte UV/Corona-Behandlung aus folgenden Behandlungen ausgewählt wird: abwechselnd eine UV-Behandlung und eine Corona-Behandlung, gleichzeitige UV- und Corona-Behandlung, eine Behandlung, die eine oder mehrere abwechselnde Sequenzen und eine oder mehrere gleichzeitige Sequenzen der UV- und Corona-Behandlungen umfasst, und ihre Kombinationen.

3. Verfahren zur Behandlung einer Oberfläche nach Anspruch 1, **dadurch gekennzeichnet, dass** das Polymersubstrat ausgewählt wird aus:
I- Thermoplasten, die vorteilhafterweise aus folgenden Thermoplasten ausgewählt werden:
→ Polyolefine: Polystyrol, Styrol-Copolymere, wie Poly(Styrol-Butadien-Styrol) oder SBS, Polypropylen, Polyethylen;
→ Polyamide;
→ Copolymere aus Acrylnitril:
• und aus Methylacrylat;
• und aus Methacrylsäuremethylester;
• aus Vinylchlorid und aus Styrol (SAN);
• aus Butadien und aus Styrol (ABS);
• aus Butadien, Styrol (ABS) und Polycarbonat PC; oder
II- Hitzehärtbaren Substraten, vorteilhafterweise ausgewählt aus den hitzhärtbaren Substraten:
→ Polyimide;
→ Polyester;
→ Phenolharze;
→ Epoxide.

4. Verfahren zur Behandlung einer Oberfläche nach einem der vorherigen Ansprüche, **dadurch gekennzeichnet, dass** die gemischte UV/Corona-Behandlung mindestens einen Wechsel zwischen einer UV-Behandlung und einer Corona-Behandlung umfasst.

5. Verfahren zur Behandlung einer Oberfläche nach Anspruch 1, **dadurch gekennzeichnet, dass** die gemischte UV/Corona-Behandlung 1 - 120 mal einen Wechsel zwischen einer UV-Behandlung von einer Länge von 0,01 Sekunden bis 30 Minuten und einer Corona-Behandlung von einer Länge von 0,01 Sekunden bis 30 Minuten umfasst.

6. Verfahren zur Behandlung einer Oberfläche nach einem der Ansprüche 1 bis 5, **dadurch gekennzeichnet, dass** die nicht elektrolytische Metallisierung eine nichtelektrolytische Metallisierung durch Aufspritzen einer oder mehrerer Redoxlösungen in Form eines oder mehrerer Aerosole ist.

7. Verfahren zur Behandlung einer Oberfläche nach einem der Ansprüche 1 bis 5, **dadurch gekennzeichnet, dass** die nichtelektrolytische Metallisierung eine nichtelektrolytische Metallisierung durch Eintauchen in ein Bad oder mehrere Bäder aus Redoxlösungen ist.

8. Verfahren zur Behandlung einer Oberfläche nach einem der Ansprüche 1 bis 7, **dadurch gekennzeichnet, dass** die Abwässer aufbereitet und recycelt werden, und dass die Aufbereitung und das Recycling der Abwässer folgende Schritte in der Reihenfolge umfassen:
- Rückgewinnung der Abwässer in einem Container,
- Destillation in einem Verdampfer,
- Weiterverwendung des Destillats in dem Metallisierungsverfahren oder Entsorgung in den Abfluss.

9. Verfahren zur Behandlung einer Oberfläche nach einem der Ansprüche 1 bis 8, **dadurch gekennzeichnet, dass** eine Vielzahl von Substraten in Reihe ohne Unterbrechung der Kette behandelt werden.

10. Vorrichtung zur Ausführung des Verfahrens, das nach einem beliebigen der Ansprüche 1 bis 9 definiert ist, **dadurch gekennzeichnet, dass** sie folgende Elemente umfasst:
• mindestens ein Modul zur gemischten UV/Corona-Behandlung einer Oberfläche,
• mindestens ein Metallisierungsmodul.
